# EUROPÄISCHE PATENTANMELDUNG

(11) **EP 0 719 888 A2**
(43) Veröffentlichungstag der Anmeldung: **03.07.1996**
(21) Anmeldenummer: 95119969.4
(22) Anmeldetag: 18.12.1995
(51) Int. Cl.: D06P 1/18, D06P 3/54, D06P 3/82, C09B 29/01, C09B 29/042

(54) **Verfahren zum Färben von Polyester und polyesterhaltigen Textilmaterialien**

(30) Priorität: 28.12.1994 DE 4446943
(71) Anmelder: DyStar Japan Ltd., Osaka-shi, Osaka 541 (JP)
(72) Erfinder: Bühler, Ulrich, Dr., D-63755 Alzenau (DE)
(74) Vertreter: Muley, Ralf, Dr.

(57) **Zusammenfassung**

Die vorliegende Erfindung betrifft ein Verfahren zum Färben von Polyester oder polyesterhaltigen Textilmaterialien bei pH 8 bis pH 11, dadurch gekennzeichnet, daß man einen oder mehrere Monoazofarbstoffe der allgemeinen Formel I 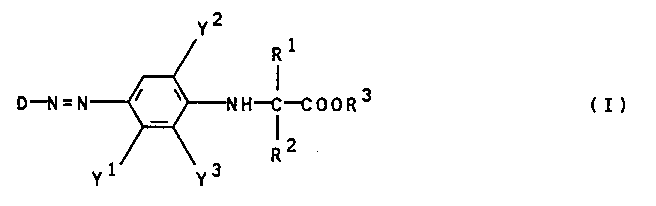
einsetzt, worin
- D: ein substituierter Phenylrest der allgemeinen Formel II 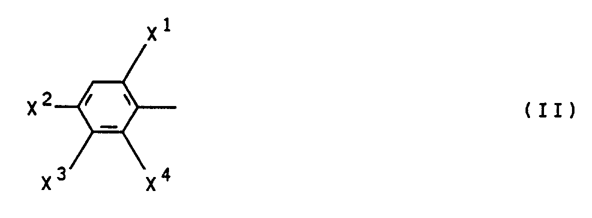 oder
5,6-Dichlorbenzthiazolyl-2
6,7-Dichlorbenzthiazolyl-2
6-Chlorbenzthiazolyl-2
5-Nitrobenzthiazolyl-2
6-Nitrobenzthiazolyl-2
6-Methylsulfonylbenzthiazolyl-2 oder
5-Nitrobenzisothiazolyl-3
bedeutet und X¹, X², X³, X⁴, Y¹, Y², Y³, R¹, R² und R³ wie in Anspruch 1 angegeben definiert sind.

## Beschreibung

Die vorliegende Erfindung betrifft ein Verfahren zum Färben von textilem Polyester oder polyesterhaltigen Textilmaterialien mit Azofarbstoffen.

In der Regel werden textiles Polyester oder polyesterhaltige Textilmaterialien mit Dispersionsfarbstoffen aus wäßrigem Färbebad bei HT-Bedingungen in einem Temperaturbereich von 120 bis 140°C bei pH-Werten von 4 bis 6 gefärbt, da bei höheren pH-Werten die Dispersionsfarbstoffe teilweise oder ganz zerstört werden. Bei höheren pH-Werten kommt es somit zu Farbstärkeverlusten und Farbtonabweichungen beim Färben und die Färbungen sind nicht reproduzierbar. Nun wird normalerweise die Polyesterfaser in einem separaten Schritt vor dem Färben einer alkalischen Vorbehandlung unterworfen, um Hilfsmittel, die beim Weben oder Spinnen der Faser eingesetzt worden sind, zu entfernen. Diese Hilfsmittel sind z.B. Ölungs- oder Schlichtemittel, die bei ihrem Vorhandensein ein egales Anfärben der Polyesterfaser erschweren oder unmöglich machen würden. Die alkalische Behandlung wird auch durchgeführt, um Oligomere der Polyesterfaser, die beim Färbevorgang aus dem Faserinneren heraustreten und die Färbung unegal erscheinen lassen würden, zu zerstören und in der wäßrigen Färbeflotte zu halten. Die genannten Oligomere sind insbesondere beim Garnfärben unerwünscht, da sie sich beim Spinnen der gefärbten Garne in den Spinnapparaten an den Stellen, wo das Garn umgelenkt wird, durch Abrieb pulverartig absetzen. Sie verschmutzen so die Apparatur und führen dazu, daß das Garn reißt.

Diese alkalische Vorbehandlung wird zweckmäßigerweise bei erhöhter Temperatur durchgeführt. Um Zeit und Energie zu sparen und um die Anzahl der für beide Prozesse, alkalische Vorbehandlung und Färben, benötigten Apparate zu reduzieren, war es schon immer das Ziel, beide Prozesse zu einem Ein-Bad-Spül- und Färbeverfahren zu vereinigen. Zur Realisierung dieses Zieles müssen allerdings Verfahren entwickelt werden, die im wäßrigen Färbebad bei pH 8 bis pH 11 reproduzierbare Färbungen ergeben.

Polyester-Zellulose- bzw. Polyester-Polyamid-Mischgewebe werden mit Dispersions- bzw. Reaktivfarbstoffen aus wäßrigem Färbebad in der Regel in zwei Färbeschritten gefärbt. Wie oben erwähnt, werden dabei die Dispersionsfarbstoffe auf den Polyesteranteil bei pH 4 bis 6 appliziert, die Reaktivfarbstoffe auf den Zellulose- bzw. Polyamid-Anteil im pH-Bereich zwischen pH 11 und 13. Auch hier war es in der Vergangenheit das Ziel, ein einbadiges Applikationsverfahren für beide Farbstoffklassen zu entwickeln. Hierfür hat man nach Reaktivfarbstoffen gesucht, die bereits bei pH-Werten zwischen 8 und 11 gefärbt werden können, und es waren auch hier Verfahren erforderlich, die sicherstellen, daß unter diesen Bedingungen der Polyesteranteil mit Dispersionsfarbstoffen reproduzierbar gefärbt werden kann.

Zur Behandlung der Mängel bisheriger Verfahren wird in der DE-A 39 38 631 eine Methode beschrieben, bei der Dispersionsfarbstoffe im pH-Bereich zwischen pH 8 und 10 in Gegenwart mindestens einer, gegebenenfalls am Stickstoff substituierter Aminosäure und/oder eines Alkalimetallsalzes einer gegebenenfalls am Stickstoff substituierten Aminosäure zum Färben eingesetzt werden.

In der EP-A 501 238 werden brillante rote und in der EP-A 540 936 klare blaue Farbstoffe beschrieben, mit denen bereits im pH-Bereich zwischen 8 und 11 auch ohne Zuhilfenahme einer gegebenenfalls am Stickstoff substituierten Aminosäure und/oder eines Alkalimetallsalzes einer gegebenenfalls am Stickstoff substituierten Aminosäure gefärbt werden können. Diese Farbstoffe können jedoch nicht eingesetzt werden zum Färben von Orangetönen, tiefen Rot- oder Rubintönen sowie von Marineblautönen.

Aufgabe der vorliegenden Erfindung war es deshalb, alkalistabile Farbstoffe bereitzustellen, die orangefarbene, tiefrote bzw. rubinrote und marineblaue Färbungen mit guten Applikationseigenschaften und guten Gebrauchsechtheiten liefern.

Es wurde nun überraschenderweise gefunden, daß ausgewählte Farbstoffe mit Carbonestergruppen beim Färben im pH-Bereich zwischen 8 und 11 eingesetzt werden können. Diese Farbstoffe sind teilweise aus der EP-A 391 121 bzw. der DE-A 22 54 017 bekannt, ohne daß allerdings ihre besondere Eignung für die Alkalifärberei bekannt oder naheliegend gewesen wäre.

Dieser Befund ist insbesondere deshalb überraschend, weil in der GB-A 1 543 724, der EP-A 51 261 sowie in der EP-A 5266 bereits Farbstoffe beschrieben sind, die am Chromophor mindestens eine Carbonestergruppe tragen und die im alkalischen Ätzreservedruck Drucke mit scharfen Konturen ergeben. Bei diesem Verfahren werden die Farbstoffe bekanntlich mittels einer alkalischen Ätzpaste, die im Falle der EP-A 51 261 einen pH-Wert von mindestens 8 aufweist, quantitativ zerstört.

Die Erfindung betrifft somit ein Verfahren zum Färben von Polyester oder polyesterhaltigen Textilmaterialien bei pH 8 bis pH 11, dadurch gekennzeichnet, daß man einen oder mehrere Monoazofarbstoffe der allgemeinen Formel I 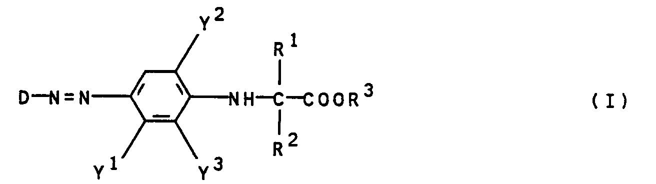
einsetzt, worin
- D: ein substituierter Phenylrest der allgemeinen Formel II 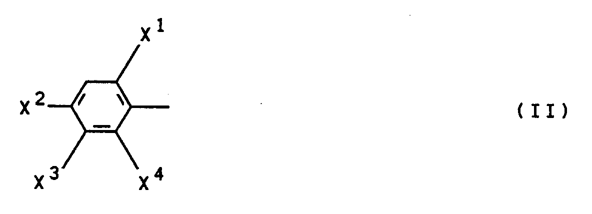 oder
5,6-Dichlorbenzthiazolyl-2
6,7-Dichlorbenzthiazolyl-2
6-Chlorbenzthiazolyl-2
5-Nitrobenzthiazolyl-2
6-Nitrobenzthiazolyl-2
6-Methylsulfonylbenzthiazolyl-2 oder
5-Nitrobenzisothiazolyl-3
ist und
- X¹: Wasserstoff;
Fluor;
Chlor;
Brom;
Methyl;
Trifluormethyl;
(C₁-C₄)-Alkylsulfonyl;
Cyan oder
Nitro;
- X²: Nitro;
Cyan;
(C₁-C₄)-Alkylsulfonyl;
(C₁-C₄)-Alkylsulfonyl, das substituiert ist durch Hydroxy, Chlor, Brom, Cyan oder (C₁-C₄)-Alkoxy;
Phenylsulfonyl;
Phenylsulfonyl, das ein- oder zweifach substituiert ist durch Methyl, Ethyl, Methoxy, Ethoxy, Fluor, Chlor oder Brom;
Di-(C₁-C₄)-alkylaminosulfonyl;
Di-(C₁-C₄)-alkylaminosulfonyl, wobei eine oder beide Alkylgruppen unabhängig voneinander substituiert sind durch Hydroxy, Chlor, Brom, Cyan, Phenyl, Phenoxy oder (C₁-C₄)-Alkoxy;
(C₁-C₄)-Alkylcarbonyl;
(C₁-C₄)-Alkylcarbonyl, das durch Hydroxy, Chlor, Brom, Cyan, (C₁-C₄)-Alkoxy, Phenoxy oder Phenyl substituiert ist;
Phenylcarbonyl;
Phenylcarbonyl, das ein- oder zweifach substituiert ist durch Methyl, Ethyl, Methoxy, Ethoxy, Fluor, Chlor oder Brom;
Aminocarbonyl;
Phenylaminocarbonyl;
Phenylaminocarbonyl, das ein- oder zweifach substituiert ist durch Methyl, Ethyl, Methoxy, Ethoxy, Fluor, Chlor oder Brom;
(C₁-C₄)-Alkylaminocarbonyl;
(C₁-C₄)-Alkylaminocarbonyl, das substituiert ist durch Hydroxy, Chlor, Brom, Cyan, Phenyl, Phenoxy oder (C₁-C₄)-Alkoxy;
Di-(C₁-C₄)-alkylaminocarbonyl;
Di-(C₁-C₄)-alkylaminocarbonyl, wobei eine oder beide Alkylgruppen unabhängig voneinander substituiert sind durch Hydroxy, Chlor, Brom, Cyan, Phenyl, Phenoxy oder (C₁-C₄)-Alkoxy;
Trifluormethyl;
Fluor;
Chlor;
Brom;
(C₁-C₆)-Alkyl;
Cyclopentyl;
Cyclohexyl;
(C₁-C₄)-Alkoxy;
(C₁-C₄)-Alkoxy, das substituiert ist durch (C₁-C₄)-Alkoxy oder Hydroxy;
Wasserstoff;
- X³: Fluor;
Chlor;
Brom;
(C₁-C₄)-Alkoxy oder Wasserstoff;
- X⁴: Cyan;
Fluor;
Chlor;
Brom oder Wasserstoff;
- Y¹: Wasserstoff;
Fluor;
Chlor;
Brom;
Methyl;
Ethyl;
(C₁-C₄)-Alkoxy;
NHCOR⁴;
NHCOOR⁴ oder NHSO₂R⁵ oder
- Y¹ und Y³: zusammen mit dem sie tragenden Benzolkern einen Naphthylrest bilden;
- Y²: Wasserstoff;
Fluor;
Chlor;
Methyl;
(C₁-C₄)-Alkoxy oder
(C₁-C₄)-Alkoxy, das substituiert ist durch (C₁-C₄)-Alkoxy oder Hydroxy;
- R¹: (C₁-C₆)-Alkyl;
- R²: (C₁-C₆)-Alkyl oder Wasserstoff;
- R³: (C₁-C₈)-Alkyl;
(C₁-C₈)-Alkyl, das substituiert ist durch Chlor, Brom, Cyan, Hydroxy, (C₁-C₈)-Alkoxy, Phenoxy;
Phenyl;
(C₃-C₅)-Alkenyl;
Cyclopentyl;
Cyclohexyl;
Benzyl oder (C₁-C₈)-Alkyl, dessen Kohlenwasserstoffkette durch 2 oder 3 Sauerstoffatome unterbrochen ist;
- R⁴: (C₁-C₄)-Alkyl;
(C₁-C₄)-Alkyl, das durch Chlor, Brom, (C₁-C₄)-Alkoxy, Cyan, Hydroxy oder Phenyl substituiert ist;
Phenyl und
- R⁵: (C₄-C₆)-Alkyl
bedeuten.

Alkyl- und Alkoxygruppen können geradkettig oder verzweigt sein, wobei primär verzweigt bevorzugt und geradkettig besonders bevorzugt ist.

(C₁-C₄)-Alkyl ist beispielsweise Methyl, Ethyl, n-Propyl, i-Propyl, n-Butyl, i-Butyl und sek.Butyl. Analoges gilt für Gruppen wie (C₁-C₄)-Alkylcarbonyl, (C₁-C₄)-Alkoxy usw. (C₁-C₈)-Alkyl kann darüberhinaus für n-Pentyl, i-Pentyl, sek.Pentyl, n-Hexyl, i-Hexyl, n-Octyl oder i-Octyl stehen.

Durch Hydroxy oder (C₁-C₄)-Alkoxy, substituiertes (C₁-C₄)-Alkyl ist beispielsweise ist 2-Hydroxyethyl, 4-Hydroxybutyl, 2,3-Dihydroxypropyl, 2-Methoxy-, 2-Ethoxy-, 2-n-Propoxy-, 2-i-Propoxy-, 2-n-Butoxy-, 2-i-Butoxy-, 2-sek.Butoxy-, 2-tert.Butoxyethyl, 3-Methoxy-, 3-Ethoxy-, 3-n-Propoxy-, 3-i-Propoxy-, 3-n-Butoxy-, 3-sek.Butoxypropyl, 4-Methoxy-, 4-Ethoxy-, 4-n-Propoxy-, 4-n-Butoxybutyl, 2-Hydroxy-3-methoxy-, -3-ethoxy- oder -3-n-butoxypropyl.

Durch Hydroxy oder (C₁-C₄)-Alkoxy substituiertes (C₁-C₈)-Alkyl ist darüberhinaus beispielsweise 6-Hydroxyhexyl, 6-Methoxy-, 6-Ethoxyhexyl, 3-Hydroxy- bzw. 3-Methoxy-2,2-dimethylpropyl bzw. -2,2-diethylpropyl, 6-Hydroxy- bzw. 6-Methoxy-2-methylhexyl bzw. -3-methylhexyl, 4-Hydroxy-4-methylpentyl-2, 3-Hydroxy-2-ethylhexyl, 3-Hydroxy-2,2-dimethylhexyl.

Durch Phenoxy oder Phenyl substituiertes (C₁-C₄)-Alkyl ist beispielsweise Phenoxymethyl, -ethyl, -propyl und -butyl, Benzyl, Phenethyl und Phenpropyl.

Durch Phenoxy oder Phenyl substituiertes (C₁-C₈)-Alkyl ist darüberhinaus beispielsweise 6-Phenoxy- bzw. 6-Phenylhexyl.

Durch Chlor, Brom oder Cyan substituiertes (C₁-C₄)-Alkyl ist beispielsweise 2-Chlor-, 2-Brom- oder 2-Cyanethyl, 4-Chlor- oder 4-Cyanbutyl.

Durch Chlor, Brom oder Cyan substituiertes (C₁-C₈)-Alkyl ist darüberhinaus beispielsweise 6-Chlor- bzw. 6-Cyanhexyl.

Substituiertes (C₁-C₄)-Alkoxy ist beispielsweise 2-Hydroxyethoxy, 4-Hydroxybutoxy, 2-Hydroxypropoxy, 2,3-Dihydroxypropoxy, 2-Methoxy-, 2-Ethoxy-, 2-n-Propoxy-, 2-i-Propoxy-, 2-n-Butoxy-, 2-i-Butoxy-, 2-tert.Butoxyethoxy, 3-Methoxypropoxy, 4-Methoxy-, 4-Ethoxy-, 4-n-Butoxybutoxy, 2-Phenoxyethoxy, 4-Phenoxyethoxy, Benzyloxy, Phenethoxy und 3-Phenpropoxy.

(C₁-C₈)-Alkyl, dessen Kohlenstoffkette durch 2 oder 3 Sauerstoffatome unterbrochen ist, ist beispielsweise Methoxy- bzw. n-Butoxy-ethoxyethoxy oder Methoxybutoxyethoxy.

Alkyl in für X² stehenden gegebenenfalls substituierten Di-(C₁-C₄)-Alkylaminosulfonyl, (C₁-C₄)-Alkylaminocarbonyl und Di-(C₁-C₄)-alkylaminocarbonyl ist vorzugsweise lineares (C₂-C₄)-Alkyl.

Steht D für einen Rest der allgemeinen Formel II, so bedeuten bevorzugt
- X¹: Wasserstoff, Chlor, Brom, Methylsulfonyl oder Nitro;
- X²: Chlor, Brom, Nitro, (C₁-C₄)-Alkylsulfonyl, Di-(C₂-C₄)-alkylaminosulfonyl, (C₂-C₄)-Alkylaminocarbonyl, Di-(C₂-C₄)-alkylaminocarbonyl, (C₁-C₄)-Alkylcarbonyl oder Phenylcarbonyl, und wenn X¹ und X⁴ Cyan bedeuten, darüber hinaus noch Wasserstoff, (C₁-C₄)-Alkyl, (C₁-C₄)-Alkoxy, Chlor oder Brom;
- X³: Chlor und insbesondere Wasserstoff;
- X⁴: Wasserstoff, Chlor oder Brom;
- Y¹: Wasserstoff, Methyl, Methoxy, Ethoxy, Chlor NHCOR⁴ oder NHCOOR⁴ oder, falls Y² Wasserstoff ist, zusammen mit Y³ und dem sie tragenden Benzolkern einen Naphthylrest;
- Y²: Wasserstoff, Chlor, Methoxy oder Ethoxy;
- Y³: Wasserstoff;
- R¹ und R²: unabhängig voneinander Methyl oder Ethyl, insbesondere Methyl;
- R³: unsubstituiertes lineares oder iso-(C₁-C₈)-Alkyl und insbesondere (C₄-C₆)-Alkyl; und
- R⁴: (C₁-C₄)-Alkyl oder Phenyl, wenn Y¹ für NHCOR⁴ steht und (C₂-C₄)-Alkyl, wenn Y¹ für NHCOOR⁴ steht.

Steht D für einen Rest der allgemeinen Formel II, so bedeuten besonders bevorzugt
- X¹: Wasserstoff, Chlor, Brom oder Methylsulfonyl;
- X²: Nitro;
- X³, X⁴, Y² und Y³: Wasserstoff; und
- Y¹: Wasserstoff, Methyl, Methoxy, Ethoxy, NHCOR⁴ oder NHCOOR⁴;
oder
- X¹: Nitro;
- X²: Chlor, Brom, (C₁-C₄)-Alkylsulfonyl, Di-(C₁-C₄)-alkylsulfonyl, (C₁-C₄)-Alkylaminocarbonyl, D-(C₁-C₄)-alkylaminocarbonyl, (C₁-C₄)-Alkylcarbonyl oder Phenylcarbonyl;
- X³, X⁴, Y² und Y³: Wasserstoff; und
- Y¹: Wasserstoff, Methyl, Methoxy, Ethoxy, NHCOR⁴ oder NHCOOR⁴;
oder
- X¹ und X⁴: Cyan;
- X²: Wasserstoff, (C₁-C₄)-Alkyl, (C₁-C₄)-Alkoxy, Chlor oder Brom;
- X³, Y² und Y³: Wasserstoff; und
- Y¹: NHCO(C₂-C₄)-Alkyl oder NHCOO(C₂-C₄)-Alkyl;
oder
- X¹ und X²: Nitro;
- X³ und Y²: Wasserstoff;
- X⁴: Wasserstoff, Chlor oder Brom; und
- Y¹ und Y³: zusammen mit dem sie tragenden Benzolkern einen Naphthylrest.

Steht D für einen Rest der allgemeinen Formel II, so bedeuten ganz besonders bevorzugt
- X¹: Wasserstoff, Chlor oder Brom;
- X²: Nitro;
- X³, X⁴, Y² und Y³: Wasserstoff;
- Y¹: NHCOR⁴;
- R¹ und R²: Methyl; und
- R³: (C₄-C₆)-Alkyl.

Neben dem Rest der allgemeinen Formel II stehen für D bevorzugt 5,6-Dichlorbenzthiazolyl-2, 6,7-Dichlorbenzthiazolyl-2 und 6-Nitrobenzthiazolyl-2.

Bevorzugte erfindungsgemäß einzusetzende Farbstoffe der allgemeinen Formel I sind solche, die die oben als bevorzugt beschriebenen Merkmale aufweisen. Besonders bevorzugte Farbstoffe weisen mehrere der oben als bevorzugt beschriebenen Merkmale auf.

Die Farbstoffe der allgemeinen Formel I können dadurch hergestellt werden, daß eine Verbindung der allgemeinen Formel III 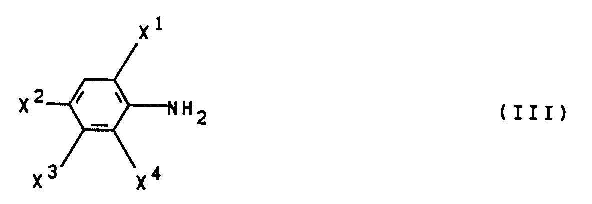
worin X¹, X², X³ und X⁴ wie oben angegeben definiert sind, oder 2-Amino-5,6-dichlor-, -6,7-dichlor-, -6-chlor-, -5-nitro-, -6-nitro- oder -6-methylsulfonylbenzthiazol oder 3-Amino-5-nitrobenzisothiazol diazotiert und auf eine Verbindung der allgemeinen Formel IV 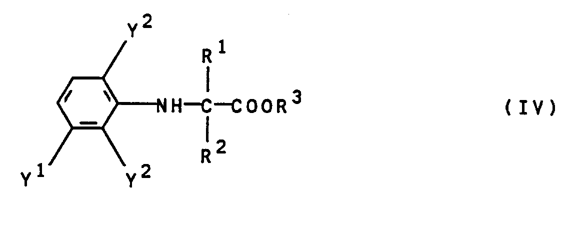
gekuppelt wird.

Die dazu erforderliche Verfahrensweise ist dem Fachmann bekannt und beispielsweise in DE-A 22 54 017 beschrieben.

Farbstoffe der allgemeinen Formel I, in denen D für einen Rest der allgemeinen Formel II mit X¹ und X⁴ = Cyan steht, können nach dem Fachmann bekannten Methoden zur Herstellung von Dicyanazofarbstoffen erhalten werden. Insbesondere können diese Farbstoffe durch Cyanaustausch aus Verbindungen der allgemeinen Formel V 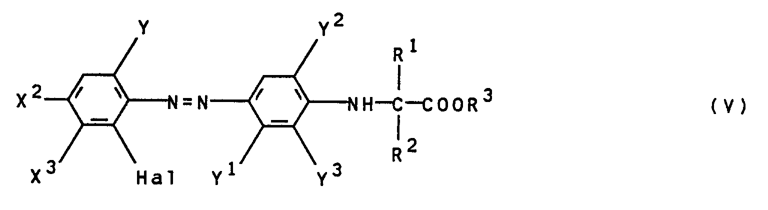
worin
Y Cyan oder Hal; Hal Chlor oder insbesondere Brom bedeuten und X², X³, Y¹, Y², Y³, R¹, R² und R³ wie oben angegeben definiert sind, erhalten werden. Das Cyanaustauschverfahren ist beispielsweise in der DE-A 27 11 130 beschrieben. Die Herstellung kann auch analog den Angaben in der EP-A 391 121 erfolgen.

Das erfindungsgemäße Verfahren kann mit einem Farbstoff der allgemeinen Formel I ausgeführt werden. Es kann aber auch mit zwei, drei oder vier Farbstoffen der allgemeinen Formel I ausgeführt werden, wobei aber zwei und drei Farbstoffe bevorzugt sind. Der Anteil eines Farbstoffs in diesen Fällen beträgt bevorzugt 5 bis 95 Gew.%, jeweils bezogen auf die Gesamtfarbstoffmenge.

Bevorzugt sind beispielsweise Mischungen aus zwei Farbstoffen der allgemeinen Formel I, wobei D für 5,6- bzw. 6,7-Dichlorbenzthiazolyl-2 steht.

Werden mehrere Farbstoffe der allgemeinen Formel I eingesetzt, so unterscheiden sich diese bevorzugt nur wenig bzw. nicht im Farbton.

Das erfindungsgemäße Verfahren wird bevorzugt unter HT-Bedingungen ausgeführt, d.h. in wäßriger Färbeflotte bei Temeperaturen zwischen 120°C und 140°C in einem Färbeautoklaven. Der pH-Wert liegt bevorzugt bei pH 9 bis pH 10.

Die nach dem erfindungsgemäßen Verfahren zu färbenden Polyester sind insbesondere solche auf Basis von Polyethylenglykolterephthalaten. Polyesterhaltige Textilmaterialien sind z.B. Mischungen aus Polyester und Polyamiden.

Bei dem erfindungsgemäßen Verfahren werden die Farbstoffe oder Farbstoffmischungen in feiner Verteilung eingesetzt.

Die Feinverteilung der Farbstoffe erfolgt in an sich bekannter Weise dadurch, daß man den in der Fabrikation anfallenden Farbstoff zusammen mit Dispergiermitteln in einem flüssigen Medium, vorzugsweise in Wasser, aufschlämmt und die Mischung der Einwirkung von Scherkräften aussetzt, wobei die ursprünglich vorhandenen Farbstoffteilchen mechanisch so weit zerkleinert werden, daß eine optimale spezifische Oberfläche erreicht wird und die Sedimentation des Farbstoffs möglichst gering ist. Die Teilchengrößen der Farbstoffe liegen im allgemeinen zwischen 0,5 und 5 µm, vorzugsweise bei etwa 1 µm.

Die bei dem Mahlvorgang mitverwendeten Dispergiermittel können nichtionogen oder anionaktiv sein. Nichtionogene Dispergiermittel sind z.B. Umsetzungsprodukte von Alkylenoxiden, wie z.B. Ethylen- oder Propylenoxid mit alkylierbaren Verbindungen, wie z.B. Fettalkoholen, Fettaminen, Fettsäuren, Phenolen, Alkylphenolen und Carbonsäureamiden. Anionaktive Dispergiermittel sind beispielsweise Ligninsulfonate, Alkyl- oder Alkylarylsulfonate oder Alkyl-aryl-polyglykolethersulfonate.

Die so erhaltenen Farbstoffzubereitungen sollen für die meisten Anwendungsweisen gießbar sein. Der Farbstoff- und Dispergiermittelgehalt ist daher in diesen Fällen limitiert. Im allgemeinen werden die Dispersionen auf einen Farbstoffgehalt bis zu 25 Gew.% und einen Dispergiermittelgehalt bis zu etwa 25 % eingestellt. Aus ökonomischen Gründen werden Farbstoffgehalte von 15 Gew.% meist nicht unterschritten.

Die Dispersionen können noch weitere Hilfsmittel enthalten, z.B. solche, die als Oxidationsmittel wirken, wie z.B. Natrium-m-nitrobenzolsulfonat oder fungicide Mittel, wie z.B. Natrium-o-phenyl-phenolat.

Für gewisse Anwendungsbereiche werden Pulvereinstellungen bevorzugt. Diese Pulver enthalten den Farbstoff oder das Farbstoffgemisch, Dispergiermittel und andere Hilfsmittel, wie z.B. Netz-, Oxydations-, Konservierungs- und Entstaubungsmittel.

Ein bevorzugtes Herstellungsverfahren für pulverförmige Farbstoffzubereitungen besteht darin, daß den oben beschriebenen flüssigen Farbstoffdispersionen die Flüssigkeit entzogen wird, z.B. durch Vakuumtrocknung, Gefriertrocknung, durch Trocknung auf Walzentrocknern, vorzugsweise aber durch Sprühtrocknung.

Zur Herstellung der Färbeflotten werden die erforderlichen Mengen der Farbstoffeinstellungen, die gemäß den obigen Angaben hergestellt wurden, mit dem Färbemedium, vorzugsweise mit Wasser, so weit verdünnt, daß sich für die Färbung ein Flottenverhältnis von 1 : 5 bis 1 : 50 ergibt. Zusätzlich werden den Flotten im allgemeinen weitere Färbereihilfsmittel, wie Dispergier-, Netz- und Fixierhilfsmittel zugesetzt.

Der erforderliche pH-Wert der Färbeflotte wird vor bzw. auch während des Färbens durch Zugabe von Basen wie Alkalihydroxiden, z.B. wäßriger Natronlauge, Alkalihydrogencarbonaten, z.B. Natriumhydrogencarbonat oder Alkalicarbonaten z.B. Soda, eingestellt.

Um pH-Schwankungen zu minimieren, werden vorzugsweise Puffersubstanzen zugesetzt, wie sie z.B. in JSDC 77 (1979), S. 47, oder JSDC 79 (1981), S. 115, beschrieben sind. Besonders geeignete Puffersubstanzen sind solche, die im pH-Bereich zwischen 9 und 11 die größte Pufferwirkung besitzen. Geeignete Puffersysteme sind z.B. Essigsäure/Natriumpyrophosphat, Borsäure/Borax, Natriumhydrogencarbonat/Natriumcarbonat, Natriumdihydrogenphosphat/Dinatriumhydrogenphosphat, Phosphorsäure/Bernsteinsäure/Borsäure oder Kombinationen organischer Phosphorverbindungen mit Polycarbonsäuren. Die Einsatzmengen an Puffersystem liegen vorzugsweise zwischen 0,5 und 10 g/l.

Als Puffersysteme können auch die in der DE-A 39 38 631 beschriebenen Aminosäuren in der dort beschriebenen Weise eingesetzt werden.

### Beispiel 1

1 g einer 20 %igen Pulverpräparation des Farbstoffs der Formel Ia 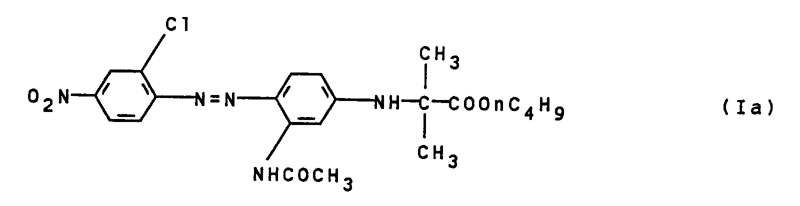
werden in einem Färbeautoklaven aus einer Färbeflotte, bestehend aus 2 l Wasser, 2 g eines Färbereihilfsmittels auf Basis Formaldehydkondensationsprodukt und 5 g einer Puffersubstanz, die eine Mischung aus einer organischen Phosphorverbindung und einer Polycarbonsäure darstellt, 45 min bei 130°C auf 100 g eines Gewebes aus Polyethylenterephthalat zum Färben eingesetzt, nachdem vorher der pH-Wert der Färbeflotte mit wäßriger Natronlauge auf 10 gestellt wurde. Danach wird die Färbung gespült, reduktiv gereinigt, sowie gespült und getrocknet. Man erhält so eine rote Färbung.

### Vergleichsversuch 1:

Die Färbung wird wiederholt, wobei als Puffersubstanz jetzt 4 g Natriumacetat zugesetzt und der pH-Wert der Färbeflotte mit Essigsäure auf 4,5 eingestellt wird. Die resultierende Färbung ist nahezu farbstärke- und farbtongleich, der Farbstoff hat sich bei pH 10 praktisch nicht zersetzt.

### Beispiel 2

Anstelle des Farbstoffs der Formel Ia werden in Beispiel 1 2 g einer 15 %igen Flüssigpräparation des Farbstoffs der Formel Ib 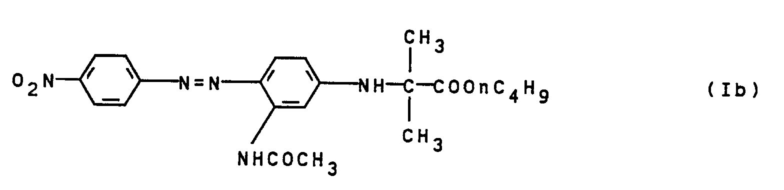
und anstelle der Puffersubstanz in Beispiel 1 6 g Borax eingesetzt und weiter so verfahren wie in Beispiel 1 beschrieben. Man erhält so ein scharlachfarbenes Gewebe, das in Farbstärke und Farbton nahezu identisch ist mit einem bei pH 4,5 zum Vergleich gefärbten Gewebe.

### Beispiel 3

Anstelle des Farbstoffs Ia werden in Beispiel 1 3 g einer 20 %igen Pulverpräparation des Farbstoffs der Formel Ic 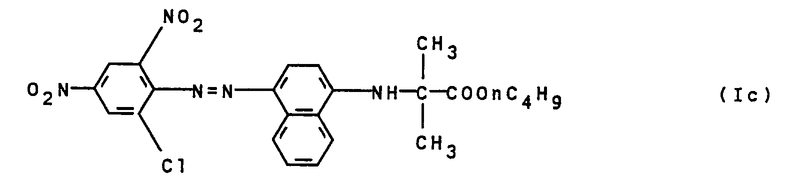
und anstelle der Puffersubstanz in Beispiel 1 1 g Natriumcarbonat und 1 g Natriumhydrogencarbonat eingesetzt und aus 1 l Färbeflotte bei dem so eingestellten pH-Wert von 10 gefärbt. Man erhält eine marineblaue Färbung, die in Farbstärke und Farbton nahezu identisch ist zu einer bei pH 5 zum Vergleich gefärbten.

In den nachfolgenden Tabellen sind weitere Farbstoffe aufgeführt, die nach dem erfindungsgemäßen Verfahren eingesetzt werden können. Sie färben Polyester in orangefarbenen bis marineblauen Tönen.

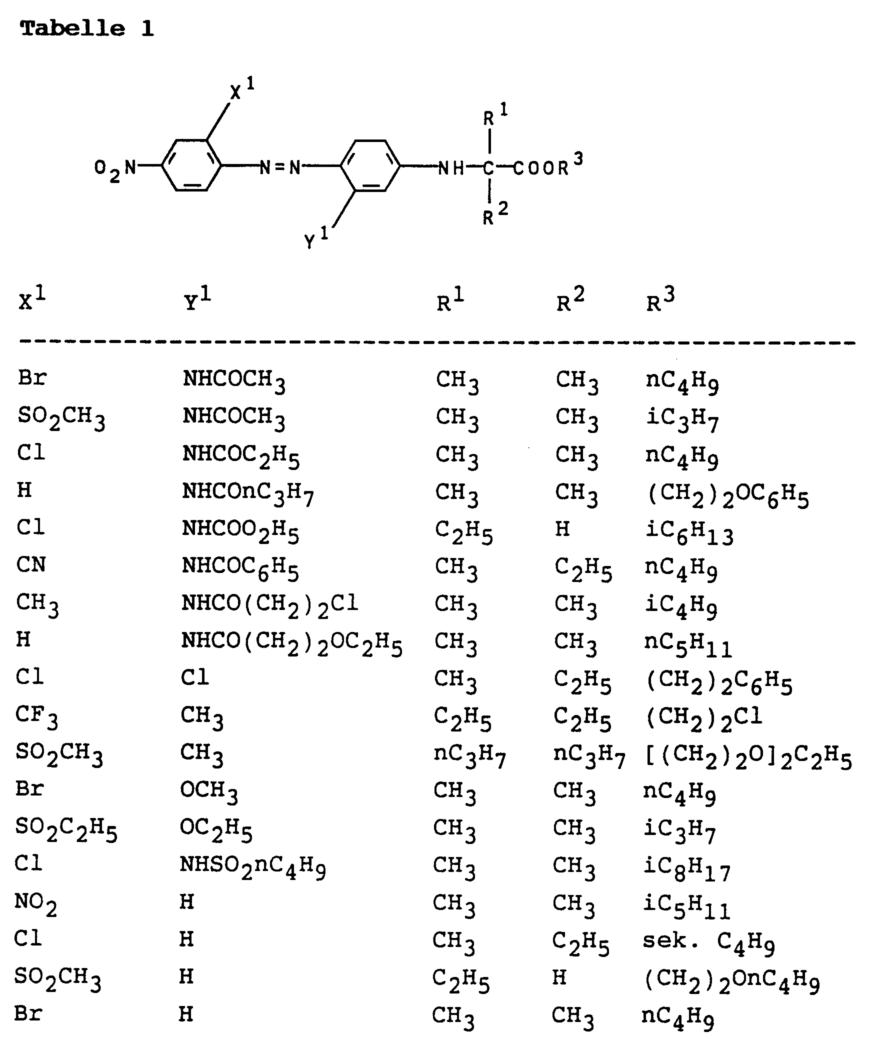

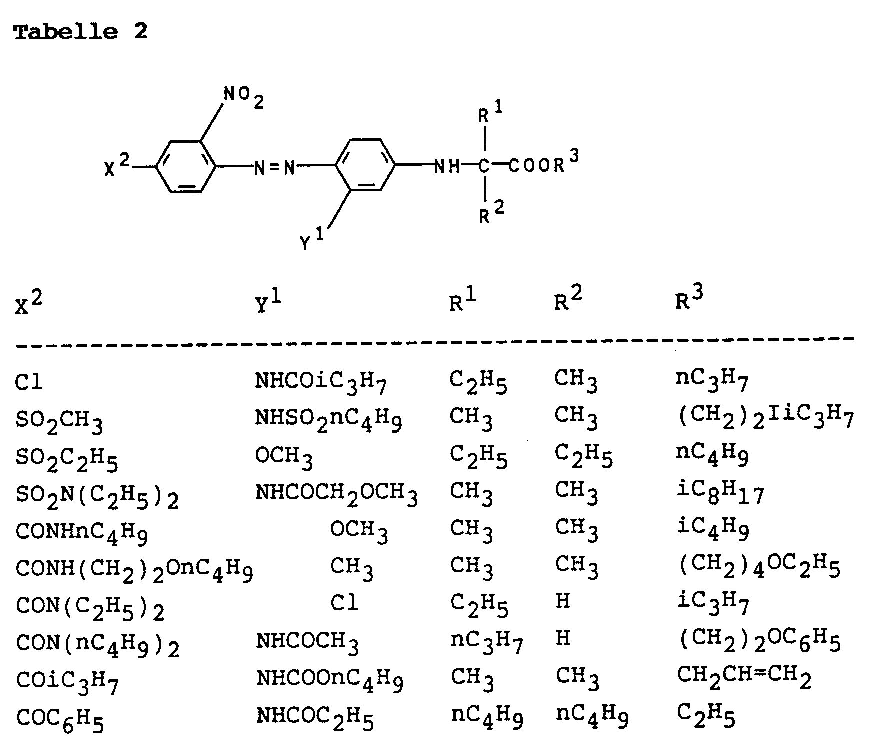

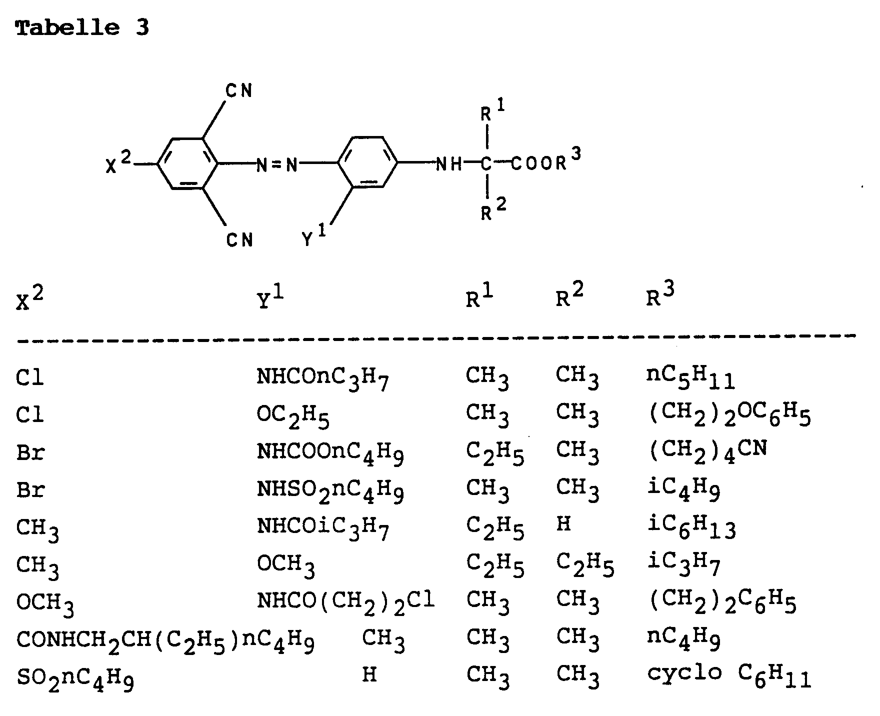

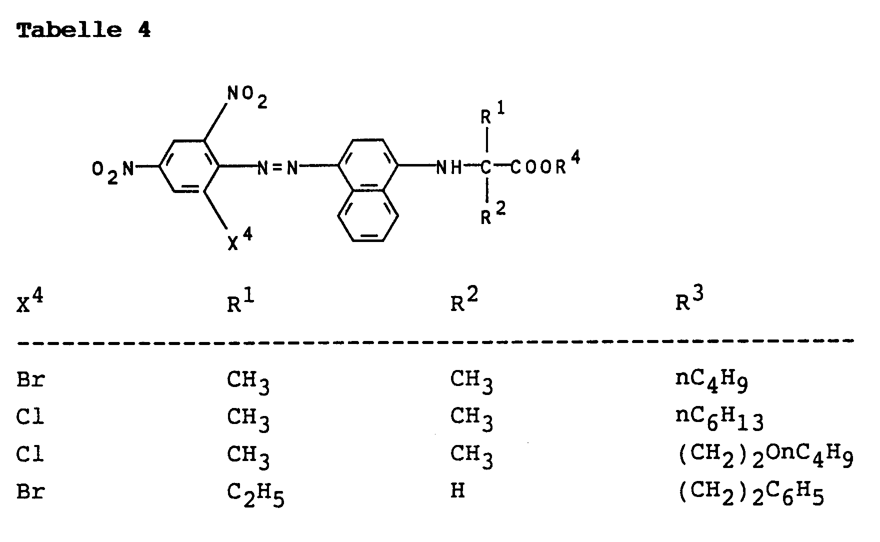

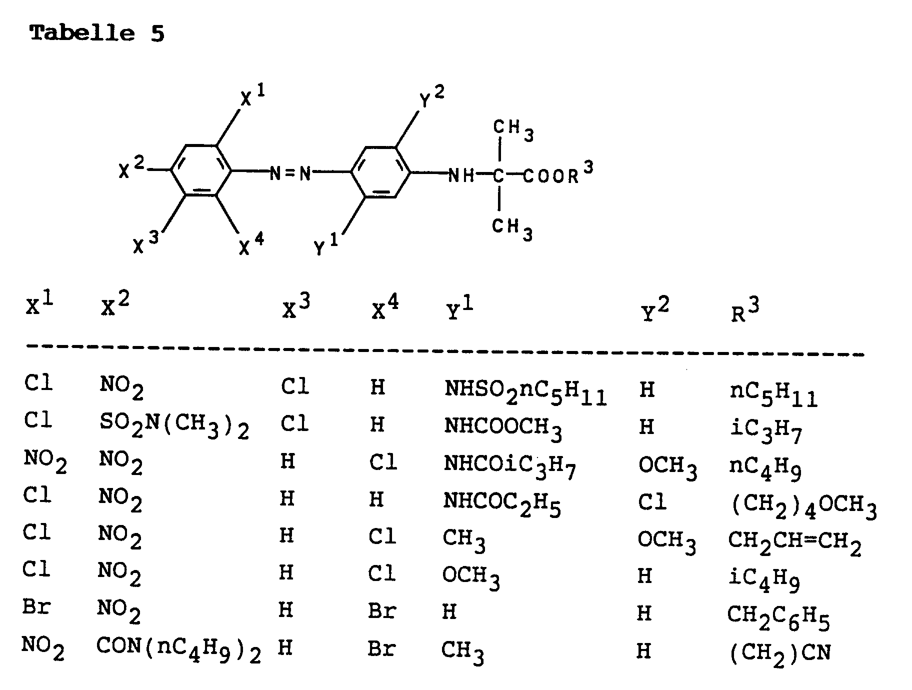

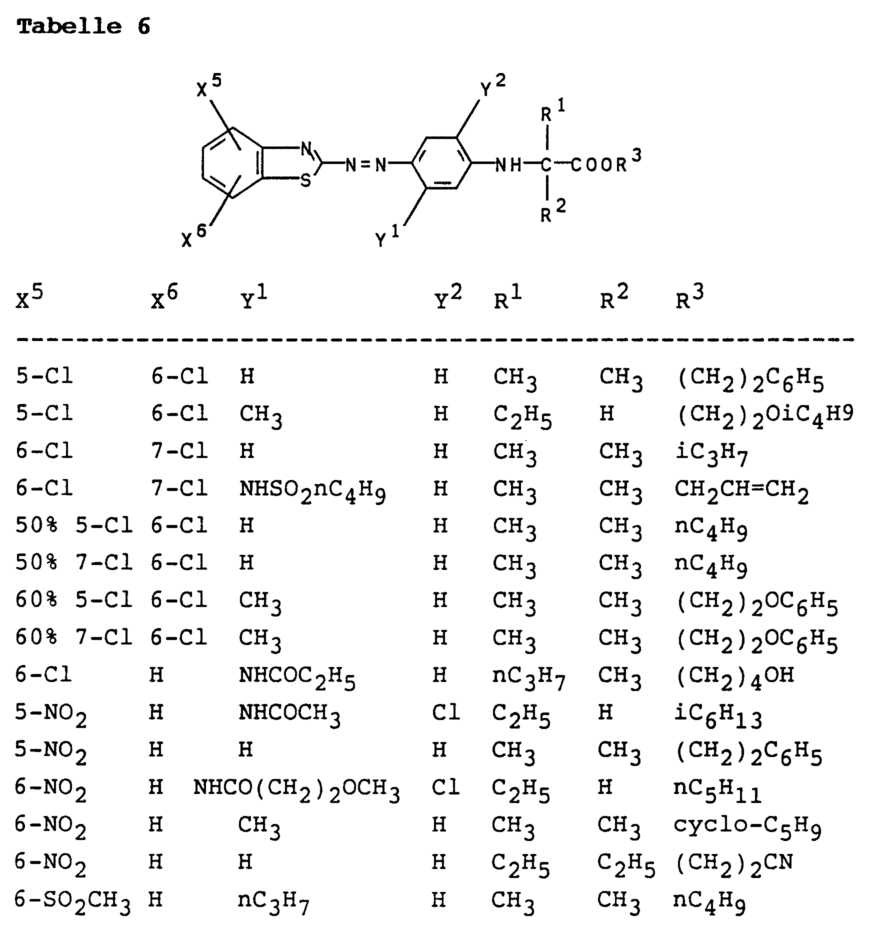

## Patentansprüche

1. Verfahren zum Färben von Polyester oder polyesterhaltigen Textilmaterialien bei pH 8 bis pH 11, dadurch gekennzeichnet, daß man einen oder mehrere Monoazofarbstoffe der allgemeinen Formel I 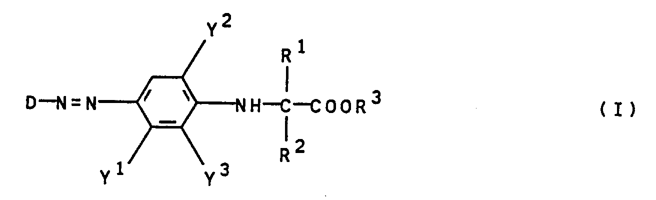 einsetzt, worin
D ein substituierter Phenylrest der allgemeinen Formel II 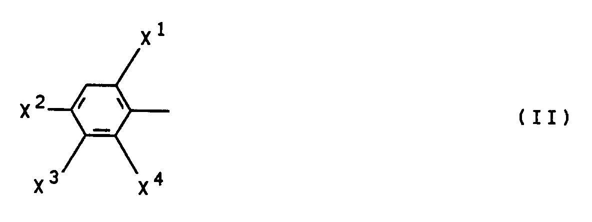 oder
5,6-Dichlorbenzthiazolyl-2
6,7-Dichlorbenzthiazolyl-2
6-Chlorbenzthiazolyl-2
5-Nitrobenzthiazolyl-2
6-Nitrobenzthiazolyl-2
6-Methylsulfonylbenzthiazolyl-2 oder
5-Nitrobenzisothiazolyl-3 ist und
X¹ Wasserstoff;
Fluor;
Chlor;
Brom;
Methyl;
Trifluormethyl;
(C₁-C₄)-Alkylsulfonyl;
Cyan oder
Nitro;
X² Nitro;
Cyan;
(C₁-C₄)-Alkylsulfonyl;
(C₁-C₄)-Alkylsulfonyl, das substituiert ist durch Hydroxy, Chlor, Brom, Cyan oder (C₁-C₄)-Alkoxy;
Phenylsulfonyl;
Phenylsulfonyl, das ein- oder zweifach substituiert ist durch Methyl, Ethyl, Methoxy, Ethoxy, Fluor, Chlor oder Brom;
Di-(C₁-C₄)-alkylaminosulfonyl;
Di-(C₁-C₄)-alkylaminosulfonyl, wobei eine oder beide Alkylgruppen unabhängig voneinander substituiert sind durch Hydroxy, Chlor, Brom, Cyan, Phenyl, Phenoxy oder (C₁-C₄)-Alkoxy;
(C₁-C₄)-Alkylcarbonyl;
(C₁-C₄)-Alkylcarbonyl, das durch Hydroxy, Chlor, Brom, Cyan, (C₁-C₄)-Alkoxy, Phenoxy oder Phenyl substituiert ist;
Phenylcarbonyl;
Phenylcarbonyl, das ein- oder zweifach substituiert ist durch Methyl, Ethyl, Methoxy, Ethoxy, Fluor, Chlor oder Brom;
Aminocarbonyl;
Phenylaminocarbonyl;
Phenylaminocarbonyl, das ein- oder zweifach substitu iert ist durch Methyl, Ethyl, Methoxy, Ethoxy, Fluor, Chlor oder Brom;
(C₁-C₄)-Alkylaminocarbonyl;
(C₁-C₄)-Alkylaminocarbonyl, das substituiert ist durch Hydroxy, Chlor, Brom, Cyan, Phenyl, Phenoxy oder (C₁-C₄)-Alkoxy;
Di-(C₁-C₄)-alkylaminocarbonyl;
Di-(C₁-C₄)-alkylaminocarbonyl, wobei eine oder beide Alkylgruppen unabhängig voneinander substituiert sind durch Hydroxy, Chlor, Brom, Cyan, Phenyl, Phenoxy oder (C₁-C₄)-Alkoxy;
Trifluormethyl;
Fluor;
Chlor;
Brom;
(C₁-C₆)-Alkyl;
Cyclopentyl;
Cyclohexyl;
(C₁-C₄)-Alkoxy;
(C₁-C₄)-Alkoxy, das substituiert ist durch (C₁-C₄)-Alkoxy oder Hydroxy;
Wasserstoff;
X³ Fluor;
Chlor;
Brom;
(C₁-C₄)-Alkoxy oder Wasserstoff;
X⁴ Cyan;
Fluor;
Chlor;
Brom oder Wasserstoff;
Y¹ Wasserstoff;
Fluor;
Chlor;
Brom;
Methyl;
Ethyl;
(C₁-C₄)-Alkoxy;
NHCOR⁴;
NHCOOR⁴ oder NHSO₂R⁵ oder
Y¹ und Y³ zusammen mit dem sie tragenden Benzolkern einen Naphthylrest bilden;
Y² Wasserstoff;
Fluor;
Chlor;
Methyl;
(C₁-C₄)-Alkoxy oder
(C₁-C₄)-Alkoxy, das substituiert ist durch (C₁-C₄)-Alkoxy oder Hydroxy;
R¹ (C₁-C₆)-Alkyl;
R² (C₁-C₆)-Alkyl oder Wasserstoff;
R³ (C₁-C₈)-Alkyl;
(C₁-C₈)-Alkyl, das substituiert ist durch Chlor, Brom, Cyan, Hydroxy, (C₁-C₈)-Alkoxy, Phenoxy;
Phenyl;
(C₃-C₅)-Alkenyl;
Cyclopentyl;
Cyclohexyl;
Benzyl oder (C₁-C₈)-Alkyl, dessen Kohlenwasserstoffkette durch 2 oder 3 Sauerstoffatome unterbrochen ist;
R⁴ (C₁-C₄)-Alkyl;
(C₁-C₄)-Alkyl, das durch Chlor, Brom, (C₁-C₄)-Alkoxy, Cyan, Hydroxy oder Phenyl substituiert ist;
Phenyl und
R⁵ (C₄-C₆)-Alkyl
bedeuten.

2. Verfahren gemäß Anspruch 1, dadurch gekennzeichnet, daß D für einen Rest der allgemeinen Formel II steht und
X¹ Wasserstoff, Chlor, Brom oder Methylsulfonyl;
X² Nitro;
X³, X⁴, Y² und Y³ Wasserstoff; und
Y¹ Wasserstoff, Methyl, Methoxy, Ethoxy, NHCOR⁴ oder NHCOOR⁴;
bedeuten.

3. Verfahren gemäß Anspruch 1, dadurch gekennzeichnet, daß D für einen Rest der allgemeinen Formel II steht und
X¹ Nitro;
X² Chlor, Brom, (C₁-C₄)-Alkylsulfonyl, Di-(C₁-C₄)-alkylsulfonyl, (C₁-C₄)-Alkylaminocarbonyl, D-(C₁-C₄)-alkylaminocarbonyl, (C₁-C₄)-Alkylcarbonyl oder Phenylcarbonyl;
X³, X⁴, Y² und Y³ Wasserstoff; und
Y¹ Wasserstoff, Methyl, Methoxy, Ethoxy, NHCOR⁴ oder NHCOOR⁴;
bedeuten.

4. Verfahren gemäß Anspruch 1, dadurch gekennzeichnet, daß D für einen Rest der allgemeinen Formel II steht und
X¹ und X⁴ Cyan;
X² Wasserstoff, (C₁-C₄)-Alkyl, (C₁-C₄)-Alkoxy, Chlor oder Brom;
X³, Y² und Y³ Wasserstoff; und
Y¹ NHCO(C₂-C₄)-Alkyl oder NHCOO(C₂-C₄)-Alkyl;
bedeuten.

5. Verfahren gemäß Anspruch 1, dadurch gekennzeichnet, daß D für einen Rest der allgemeinen Formel II steht und
X¹ und X² Nitro;
X³ und Y² Wasserstoff;
X⁴ Wasserstoff, Chlor oder Brom; und
Y¹ und Y³ zusammen mit dem sie tragenden Benzolkern einen Naphthylrest
bedeuten.

6. Verfahren gemäß Anspruch 1, dadurch gekennzeichnet, daß D für einen Rest der allgemeinen Formel II steht und
X¹ Wasserstoff, Chlor oder Brom;
X² Nitro;
X³, X⁴, Y² und Y³ Wasserstoff;
Y¹ NHCOR⁴;
R¹ und R² Methyl; und
R³ (C₄-C₆)-Alkyl
bedeuten.

7. Verfahren gemäß einem oder mehreren der Ansprüche 1 bis 6, dadurch gekennzeichnet, daß es unter HT-Bedingungen in wäßriger Färbeflotte bei Temperaturen zwischen 120°C und 140°C in einem Färbeautoklaven ausgeführt wird.

8. Verfahren gemäß einem oder mehreren der Ansprüche 1 bis 7, dadurch gekennzeichnet, daß es bei pH 9 bis pH 10 ausgeführt wird.

9. Verfahren gemäß einem oder mehreren der Ansprüche 1, 7 und 8, dadurch gekennzeichnet, daß zwei Farbstoffe der allgemeinen Formel I eingesetzt werden, wobei D für 5,6- bzw. 6,7-Dichlorbenzthiazolyl-2 oder 6-Nitrobenzthiazolyl-2 steht.
